# EUROPEAN PATENT SPECIFICATION

(11) **EP 3 957 568 B1**
(45) Date of publication and mention of the grant of the patent: **27.12.2023**
(21) Application number: 21191706.7
(22) Date of filing: 17.08.2021
(51) Int. Cl.: B64D 13/00

(54) **GASPER EXTENSION FOR REDUCED DISEASE TRANSMISSION**
FRISCHLUFTLEITUNGSVERLÄNGERUNG FÜR GERINGERE ÜBERTRAGUNG VON KRANKHEITEN
EXTENSION DE GASPER POUR UNE TRANSMISSION RÉDUITE DE MALADIE

(30) Priority: 17.08.2020 US 202063066736 P; 02.07.2021 US 202117367064
(43) Date of publication of application: 23.02.2022
(73) Proprietor: B/E Aerospace, Inc., Winston Salem, NC 27105 (US)
(72) Inventor: RHEAUME, Jonathan, West Hartford 06119 (US); QUARTARONE, Giusi, Mayfield, Cork (IE)
(74) Representative: Dehns

(56) References cited:
- EP-A1- 3 566 948
- EP-A2- 2 623 419
- WO-A1-2016/027183
- DE-B- 1 218 892
- US-A1- 2005 258 391

## Description

### CROSS-REFERENCE TO RELATED APPLICATIONS

This application claims priority to, and the benefit of, U.S. Provisional Application Serial No. 63/066,736, filed August 17, 2020 and titled "GASPER EXTENSION FOR REDUCED DISEASE TRANSMISSION".

### FIELD

The present disclosure relates to gaspers for use in aircraft and, more particularly, to gaspers designed to reduce pathogen transmission between aircraft passengers.

### BACKGROUND

Passenger aircraft, particularly commercial passenger aircraft, include various features for improving passenger comfort. For example, these aircraft may include reclining seats, seatback infotainment systems, and gaspers. The gaspers are designed to direct relatively cool air towards the passengers from above the passenger and can be adjusted for orientation and velocity of exiting air. The air flowing through the gasper may be relatively clean (e.g., pathogen free) and may include fresh air and recirculated air that has passed through a high efficiency particulate air (HEPA) filter. Gaspers are described in DE 12 18 892 B, US 2005/258391 A1, WO 2016/027183 A1, EP 2 623 419 A2 and EP 3 566 948 A1. In particular, DE 12 18 892 B describes an adjustable gasper and EP 3 566 948 describes a light source adjacent the outlet.

It is desirable to reduce transmission of pathogens between passengers on an aircraft, especially with the relative difficulty in social distancing on a commercial passenger aircraft. Water droplets may be created by passengers, for example, when a passenger sneezes, coughs, or even talks. These water droplets may include pathogens such as bacteria or viruses.

It is desirable to reduce the transmission of pathogens on an aircraft. This may be achieved by reducing the likelihood of the water droplets from one passenger reaching another passenger.

### SUMMARY

Disclosed herein is a gasper as defined by claim 1 for use in a passenger aircraft.

In any of the foregoing embodiments, the outlet has an annular shape configured to output an annular curtain of the air.

In any of the foregoing embodiments, the body has at least one of a plurality of accordion folds configured to extend to increase a length of the body and fold to decrease the length; or a plurality of telescoping body portions configured to be housed within an adjacent body portion to decrease the length or to extend from the adjacent body portion to increase the length.

In any of the foregoing embodiments, the body includes at least one of a flexible metal or a wire-reinforced duct.

In any of the foregoing embodiments, the body is adjustable in orientation such that the outlet is configured to output the air in multiple directions relative to the inlet.

In any of the foregoing embodiments, the outlet includes an adjustable nozzle configured to adjust a velocity of the air that is output by the outlet.

Any of the foregoing embodiments may further include a heating element coupled to the inlet and configured to heat the air received by the inlet.

[Deleted].

In any of the foregoing embodiments, the outlet is designed to output the air at a velocity of at least 16.4 feet (5m) per second

Any of the foregoing embodiments may further include an electrical outlet located at least one of on the body or on the outlet and configured to provide electrical power for powering an electrical device.

In any of the foregoing embodiments, the outlet is formed from a softer material than the body to reduce the likelihood of an injury caused by contact between a body part and the outlet.

Any of the foregoing embodiments may further include an alignment feature located on the gasper and configured to facilitate optimal alignment of the outlet relative to a passenger.

Any of the foregoing embodiments may further include at least one of a filter, an air freshener, or an air sanitizer configured to at least one of filter, freshen, or sanitize the air output by the outlet.

Also disclosed is a gasper for use in a passenger aircraft. The gasper includes an inlet configured to receive air. The gasper further includes an outlet configured to output the air towards a passenger seat. The gasper further includes a body formed from at least one of a flexible metal or a wire-reinforced duct, extending from the inlet to the outlet, and being adjustable between at least three lengths.

In any of the foregoing embodiments, the outlet has an annular shape configured to output an annular curtain of the air.

In any of the foregoing embodiments, the body has at least one of: a plurality of accordion folds configured to extend to increase a length of the body and fold to decrease the length; or a plurality of telescoping body portions configured to be housed within an adjacent body portion to decrease the length or to extend from the adjacent body portion to increase the length.

In any of the foregoing embodiments, the body is adjustable in orientation such that the outlet is configured to output the air in multiple directions relative to the inlet.

Any of the foregoing embodiments may further include a light source configured to output light for at least one of reading or injuring pathogens.

In any of the foregoing embodiments, the outlet is formed from a softer material than the body to reduce the likelihood of an injury caused by contact between a body part and the outlet.

Also disclosed is a gasper for use in a passenger aircraft. The gasper includes an inlet configured to receive air. The gasper further includes an outlet having an annular shape configured to output the air towards a passenger seat at a velocity between 49 feet per second (f/s) and 65.6 f/s (15 meters per second (m/s) and 20 m/s). The gasper further includes a body extending from the inlet to the outlet and being adjustable between at least three lengths.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals may denote like elements in at least a portion of the figures.
FIG. 1 illustrates an aircraft cabin having a plurality of gaspers, in accordance with various embodiments;
FIG. 2 illustrates various features of the gaspers of FIG. 1, in accordance with various embodiments;
FIGS. 3A and 3B illustrate another gasper having a body with accordion folds, in accordance with various embodiments;
FIGS. 4A, 4B, and 4C illustrate various features of a gasper having telescoping body portions, in accordance with various embodiments;
FIGS. 5A and 5B illustrate various features of a gasper having an annular outlet, in accordance with various embodiments; and
FIG. 6 illustrates various outlet shapes for gaspers, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein, within the scope of the claims. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

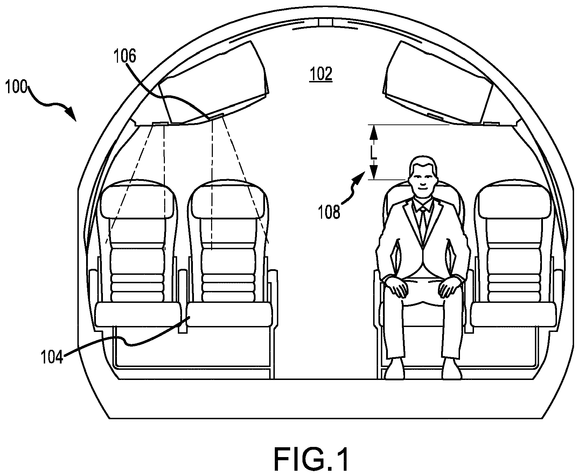

With reference to FIG. 1, a cabin 102 of an aircraft 100 is shown. The aircraft 100 may include any aircraft such as an airplane, a helicopter, or any other aircraft. The cabin 102 has one or more passenger seat 104 in which one or more passenger may rest. The cabin 102 may include one or more gasper 106 designed to direct air (e.g., including one or more of filtered air or fresh air from outside of the cabin 102). Although the gasper 106 is shown in the aircraft cabin 102, one skilled in the art will realize that the gasper 106 may likewise be installed in a cockpit or other area of an aircraft. One of the gaspers 106 (which may be associated with the seat 104) may be designed to direct air towards the seat 104 in such a way as to reduce the likelihood of pathogens from a first passenger reaching a second passenger located in the seat 104. In that regard, an optimal distance 108 between a gasper 106 and a passenger may provide the greatest reduction in pathogens reaching the passenger. Thus, the gaspers 106 may be designed to have a variable length in order to achieve the optimal distance 108 for any size passenger in the seat 104. As will be discussed further below, the gaspers 106 may include additional or alternative features that further reduce the transfer of pathogens between passengers in the cabin 102.

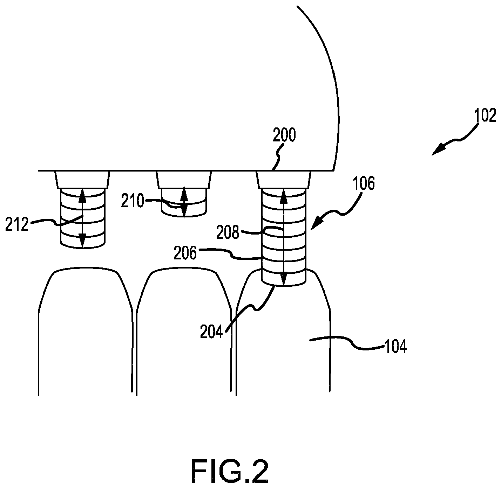

Referring now to FIG. 2, each gasper 106 may include an inlet 200 designed to receive one or more of fresh or filtered air. The gasper 106 may further include an outlet 204 designed to direct air towards a passenger or passenger seat in the cabin 102. The gasper 106 may further include a body 206 designed to port air from the inlet 200 to the outlet 204. The body 206 may have a variable length in order to achieve an optimal distance between the outlet 204 and a passenger. In various embodiments, the body 206 of the gaspers 106 may be designed to provide at least three gasper lengths. For example, the gaspers 106 may have a first gasper length 208, a second gasper length 210 that is less than the first gasper length 208, and a third gasper length 212 that is greater than the second gasper length 210 and less than the first gasper length 208.

In various embodiments, the body 206 may be flexible such that the outlet 204 can direct the air in multiple directions relative to the inlet 200, and may be sufficiently rigid so as to maintain the shape of the body 206 after adjustment. This flexibility allows the outlet 204 to direct the air towards a face or head of a passenger regardless of a passenger position in the seat (e.g., reclined, head resting on a window, upright, etc.).

In various embodiments, the gasper 106 may be designed to be entirely stowed within a recess in a passenger service unit above a respective passenger seat. For example, the gasper 106 may be locked in a stowed position by twisting the gasper 106 in a first direction, and may be released from the stowed position by twisting the gasper 106 in a second direction. In various embodiments, the gasper 106 may be designed to be installed (e.g., retrofit) in an existing aircraft cabin, for example, in place of an existing gasper. For example, the existing gasper may be removed and the gasper 106 installed in its place, or the gasper 106 may be installed over an existing gasper.

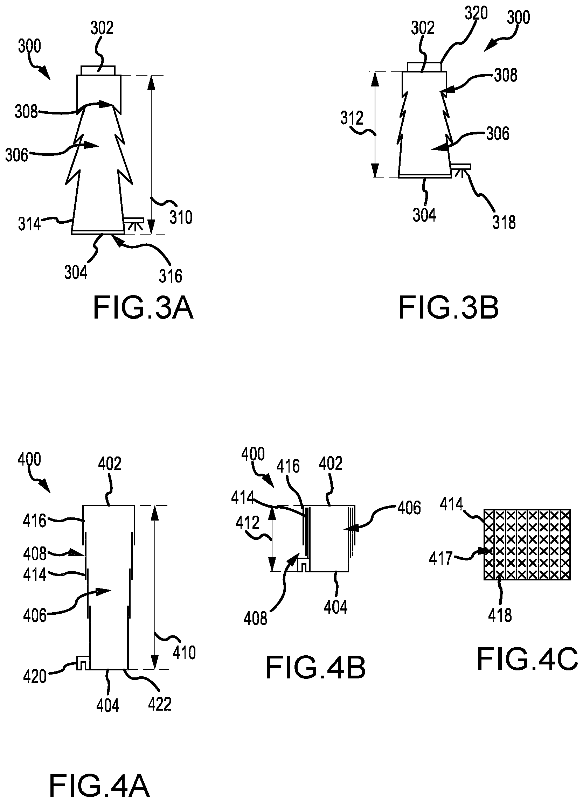

Referring now to FIGS. 3A and 3B, a gasper 300 is shown in an extended state (shown in FIG. 3A) and a compacted state (shown in FIG. 3B). The gasper 300 includes an inlet 302, an outlet 304, and a body 306 extending from the inlet 302 to the outlet 304. The body 306 is designed from a flexible metal 314 that may deform (e.g., in a desired manner) in response to application of a predetermined amount of force. The body 306 may include one or more accordion folds 308. The accordion folds 308 may allow various portions of the body 306 to be extended (shown in FIG. 3A) or folded on top of each other (shown in FIG. 3B). The gasper 300 may have a first length 310 in response to being fully extended, and may have a second length 312 that is less than the first length 310 in response to being fully compressed.

In various embodiments, the outlet 304 may have an adjustable nozzle 316. The adjustable nozzle 316 may be adjusted between various positions to increase or decrease airflow therethrough. The adjustable nozzle 316 may be adjusted using any known methods for nozzle adjustment such as rotating the nozzle 316 to increase or decrease the flow, pulling the nozzle 316 to increase flow and pushing the nozzle 316 to decrease flow, using electronic input devices to adjust the airflow, or the like.

In various embodiments, the adjustable nozzle 316 may only be adjusted in response to an input receiving feedback indicating that all passengers are pathogen free. In response to a lack of such input, the nozzle 316 may only output the airflow at a relatively high velocity to increase the likelihood of blocking pathogens from reaching a head of the passenger. Such input may be received, for example, from a pilot or flight attendant who may receive information indicating that all passengers have taken antigen tests for a specific virus and that all antigen tests have been returned negative.

A light source 318 is positioned in or on the outlet 304. The light source 318 may be oriented towards a same location or area as the outlet 304 and may thus change orientation along with the outlet 304. In various embodiments, the light source 318 may be directed in a single direction regardless of orientation of the outlet 304. The light source 318 provides illumination in a passenger area to allow a passenger to more easily see objects in and around his or her seat. Alternatively, the light source 318 emits light having a wavelength designed to injure pathogens (e.g., ultraviolet (UV) light and, as a particular example, UV-C light; if UV-C light is used, it should be emitted only when the aircraft is unoccupied as it may be hazardous to health of humans). In that regard, the light source 318 may sanitize a portion of an aircraft cabin such as a seat, a tray table, a touchscreen, or the like.

Referring now to FIGS. 4A and 4B, another gasper 400 includes an inlet 402, an outlet 404, and a body 406 extending from the inlet 402 to the outlet 404. The body 406 may include telescoping body portions 408 that may extend relative to each other (shown in FIG. 4A) or be stored in an adjacent body portion 408 to compress the body 406 (shown in FIG. 4B). For example, a first portion 414 may be stored within a second portion 416 (shown in FIG. 4B), and may be extended relative to the second portion 416. The body 406 may have a first length 410 in response to the telescoping body portions 408 being fully extended, and may have a second length 412 that is less than the first length 410 in response to the telescoping body portions 408 being stored in adjacent body portions 408.

In various embodiments and referring to FIG. 4C, the first portion 414 may include a mesh of wires 417 that supports a duct material (e.g., plastic, fabric, or other flexible material) extending around the mesh of wires 417.

In various embodiments and returning reference to FIGS. 4A and 4B, the gasper 400 may include an electrical outlet 420 located in or on at least one of the inlet 402, the outlet 404, or the body 406. The electrical outlet 420 may provide electricity for powering one or more electronic device (e.g., a laptop, telephone, or the like). For example, the electrical outlet may include a two or three-prong alternating current (AC) power outlet, a universal serial bus (USB) port, a wireless charging source (e.g., a Qi charger), or the like.

In various embodiments, the outlet 404 of the gasper 400 (along with a proximal portion of the body 406) may include a softer material 422 than the wires 417 and duct 418 (shown in FIG. 4C) of the remainder of the gasper 400. This softer material 422 may reduce the likelihood of an injury caused by a collision between the outlet 404 and a body part of a passenger.

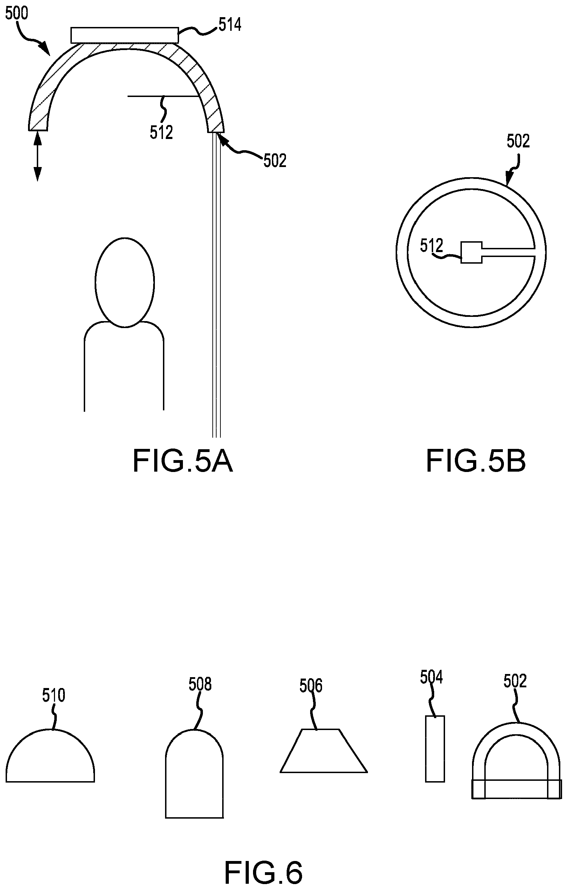

Turning now to FIGS. 5A and 5B, another gasper 500 may have an outlet 502 with an annular shape and may output an annular curtain of air. The annular curtain of air may surround a head of a passenger, thus reducing the likelihood of any pathogens reaching a nose or mouth of the passenger.

In various embodiments, the air received by the gasper 500 may pass through one or more of an air filter, an air freshener, or an air sanitizer 514 prior to reaching the gasper 500. In various embodiments, the filter, freshener, or sanitizer may be located upstream from the gasper 500, positioned at an inlet of the gasper 500, positioned in a body of the gasper 500, or the like. The air filter may filter particulates from the air prior to being output by the outlet 502. The air freshener may reduce odors or add a pleasant odor to the air prior to being output by the outlet 502. The sanitizer may sanitize the air prior to being output by the outlet 502 (e.g., adding a chemical sanitizer to the air or treating the air with a light source having a wavelength that injures pathogens).

In various embodiments, the gasper 500 may include an alignment feature 512. Some gaspers may provide increased protection against pathogens reaching a face of a passenger in response to the gasper being oriented properly towards a certain area of the passenger. In that regard, the alignment feature 512 may help a passenger align the gasper 500 to provide optimal protection against pathogens. For example, the alignment feature 512 may include a mirror with instructions for use. The instructions may state, for example, to adjust the orientation of the outlet 502 until an eye of the passenger is located entirely in the mirror. As another example, the alignment feature may include two empty rectangles, and instructions that tell a user to align the rectangles in such a way that an inner rectangle is located entirely in an outer rectangle from the vantage point of the eyes of the passenger.

Referring now to FIG. 6, various gasper outlet shapes are shown. Some outlet shapes may provide better protection from airborne pathogens than other outlet shapes, and an optimal shape may vary based on parameters such as aircraft cabin design, amount of space between passenger seats, distance from gasper outlet to passenger seats, or the like. In various embodiments, some or all of the gasper outlet shapes may be designed to output air having a velocity in excess of 16.4 feet per second (16.4 ft/s, 5.0 meters per second 5 m/s)), such as between 32.8 ft/s and 82 ft/s (10 m/s and 25 m/s) or between 49 ft/s and 65.6 ft/s (15 m/s and 20 m/s). Such relatively high velocity will reduce the likelihood of a pathogen reaching a face of a passenger if the gasper is properly oriented towards the passenger.

In particular, a first outlet 510 may include a dome-like shape that outputs the air over a relatively broad area. A second outlet 508 may include a narrower dome-like shape that outputs a narrower flow of air.

A third outlet 506 may be relatively cone-shaped and may output air in a broader area than the first outlet 510. A fourth outlet 504 may be tube-shaped and may output a narrower flow of air than the second outlet 508. The fifth outlet 502 may have the annular shape, as described above with reference to FIGS. 5A and 5B.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

## Claims

1. A gasper for use in a passenger aircraft, the gasper comprising:
an inlet (200) configured to receive air;
an outlet (204) configured to output the air towards a passenger seat (104);
a body (206) extending in length from the inlet to the outlet and being adjustable between at least three lengths (208, 210, 212); and **characterized by**:
a light source (318) located on the outlet and configured to output light at least one of for reading or for injuring pathogens.

2. The gasper of claim 1, wherein the outlet has an annular shape configured to output an annular curtain of the air.

3. The gasper of claim 1 or 2, wherein the body has at least one of:
a plurality of accordion folds (308) configured to extend to increase the length of the body and fold to decrease the length; or
a plurality of telescoping body portions (408) configured to be housed within an adjacent body portion to decrease the length or to extend from the adjacent body portion to increase the length.

4. The gasper of claim 3, wherein the body includes at least one of a flexible metal (314) or a wire-reinforced duct (417).

5. The gasper of any preceding claim, wherein the body is adjustable in orientation such that the outlet is configured to output the air in multiple directions relative to the inlet.

6. The gasper of any preceding claim, wherein the outlet includes an adjustable nozzle (316) configured to adjust a velocity of the air that is output by the outlet.

7. The gasper of any preceding claim, further comprising a heating element coupled to the inlet and configured to heat the air received by the inlet.

8. The gasper of any preceding claim, wherein the outlet is designed to output the air at a velocity of at least 16.4 feet per second (5m per second).

9. The gasper of any preceding claim, further comprising an electrical outlet (420) located on the outlet and configured to provide electrical power for powering an electrical device.

10. The gasper of any preceding claim, wherein the outlet is formed from a softer material (422) than the body to reduce the likelihood of an injury caused by contact between a body part and the outlet.

11. The gasper of any preceding claim, further comprising an alignment feature (512) located on the gasper and configured to facilitate optimal alignment of the outlet relative to a passenger.

12. The gasper of any preceding claim, further comprising at least one of a filter, an air freshener, or an air sanitizer (514) configured to at least one of filter, freshen, or sanitize the air output by the outlet.

13. A gasper as claimed in any preceding claim, the outlet having an annular shape configured to output the air towards the passenger seat at a velocity between 49 feet per second (ft/s) and 65.6 ft/s (15 meters per second (m/s) and 20 m/s).

## Patentansprüche

1. Frischluftleitung zur Verwendung in einem Passagierluftfahrzeug, wobei die Frischluftleitung umfasst:
einen Einlass (200), der zum Aufnehmen von Luft konfiguriert ist;
einen Auslass (204), der zum Ausgeben von Luft in Richtung eines Passagiersitzes (104) konfiguriert ist;
einen Körper (206), dessen Länge sich von dem Einlass bis zu dem Auslass erstreckt und der zwischen mindestens drei Längen (208, 210, 212) einstellbar ist; und **gekennzeichnet durch**:
eine Lichtquelle (318), die sich an dem Auslass angeordnet und dazu konfiguriert ist, Licht für mindestens eins von Lesen oder Schädigen von Krankheitserregern auszugeben.

2. Frischluftleitung nach Anspruch 1, wobei der Auslass eine Ringform aufweist, die dazu konfiguriert ist, einen ringförmigen Luftvorhang auszugeben.

3. Frischluftleitung nach Anspruch 1 oder 2, wobei der Körper mindestens eines von Folgendem aufweist:
eine Vielzahl von Ziehharmonikafalten (308), die dazu konfiguriert ist, sich auszudehnen, um die Länge des Körpers zu vergrößern, und zu falten, um die Länge zu verringern; oder
eine Vielzahl von teleskopierbaren Körperabschnitten (408), die dazu konfiguriert ist, in einem benachbarten Körperabschnitt untergebracht zu sein, um die Länge zu verringern, oder sich aus dem benachbarten Körperabschnitt zu erstrecken, um die Länge zu vergrößern.

4. Frischluftleitung nach Anspruch 3, wobei der Körper mindestens eines von einem flexiblen Metall (314) oder einem drahtverstärkten Kanal (417) beinhaltet.

5. Frischluftleitung nach einem der vorhergehenden Ansprüche, wobei die Ausrichtung des Körpers derart einstellbar ist, dass der Auslass dazu konfiguriert ist, die Luft relativ zu dem Einlass in mehrere Richtungen auszugeben.

6. Frischluftleitung nach einem der vorhergehenden Ansprüche, wobei der Auslass eine einstellbare Düse (316) beinhaltet, die dazu konfiguriert ist, eine Geschwindigkeit der aus dem Auslass ausgegebenen Luft einzustellen.

7. Frischluftleitung nach einem der vorhergehenden Ansprüche, ferner umfassend ein Heizelement, das an den Einlass gekoppelt und dazu konfiguriert ist, die durch den Einlass aufgenommene Luft zu erwärmen.

8. Frischluftleitung nach einem der vorhergehenden Ansprüche, wobei der Auslass dazu ausgelegt ist, die Luft mit einer Geschwindigkeit von mindestens 16,4 Fuß pro Sekunde (5 m pro Sekunde) auszugeben.

9. Frischluftleitung nach einem der vorhergehenden Ansprüche, ferner umfassend eine elektrische Steckdose (420), die an dem Auslass angeordnet und dazu konfiguriert ist, elektrische Energie zum Betreiben einer elektrischen Vorrichtung bereitzustellen.

10. Frischluftleitung nach einem der vorhergehenden Ansprüche, wobei der Auslass aus einem weicheren Material (422) als der Körper gebildet ist, um die Wahrscheinlichkeit einer Verletzung durch Kontakt zwischen einem Körperteil und dem Auslass zu verringern.

11. Frischluftleitung nach einem der vorhergehenden Ansprüche, ferner umfassend ein Ausrichtungsmerkmal (512), das an der Frischluftleitung angeordnet und dazu konfiguriert ist, eine optimale Ausrichtung des Auslasses relativ zu einem Passagier zu ermöglichen.

12. Frischluftleitung nach einem der vorhergehenden Ansprüche, ferner umfassend mindestens eines von einem Filter, einem Luftauffrischer oder einer Luftdesinfektionseinrichtung (514), der bzw. die dazu konfiguriert ist, mindestens eins von Filtern, Auffrischen oder Desinfizieren der aus dem Auslass ausgegebene Luft auszuführen.

13. Frischluftleitung nach einem der vorhergehenden Ansprüche, wobei der Auslass eine Ringform aufweist, die dazu konfiguriert ist, die Luft mit einer Geschwindigkeit zwischen 49 Fuß pro Sekunde (ft/s) und 65,6 ft/s (15 Metern pro Sekunde (m/s) und 20 m/s) in Richtung des Passagiersitzes auszugeben.

## Revendications

1. Prise d'air individuelle destinée à être utilisée dans un aéronef de passagers, la prise d'air individuelle comprenant :
une entrée (200) configurée pour recevoir de l'air ;
une sortie (204) configurée pour délivrer de l'air vers un siège passager (104) ;
un corps (206) s'étendant en longueur de l'entrée jusqu'à la sortie et étant réglable entre au moins trois longueurs (208, 210, 212) ; et **caractérisée par** :
une source de lumière (318) située sur la sortie et configurée pour émettre de la lumière destinée à permettre au moins l'une parmi la lecture ou l'attaque d'agents pathogènes.

2. Prise d'air individuelle selon la revendication 1, dans laquelle la sortie a une forme annulaire configurée pour délivrer un rideau annulaire d'air.

3. Prise d'air individuelle selon la revendication 1 ou 2, dans laquelle le corps possède au moins l'une parmi :
une pluralité de plis en accordéon (308) configurés pour s'étendre afin d'augmenter la longueur du corps et se plier pour diminuer la longueur ; ou
une pluralité de parties de corps télescopiques (408) configurées pour être logées à l'intérieur d'une partie de corps adjacente afin de diminuer la longueur ou pour s'étendre à partir de la partie de corps adjacente afin d'augmenter la longueur.

4. Prise d'air individuelle selon la revendication 3, dans laquelle le corps comporte au moins l'un parmi un métal flexible (314) ou un conduit renforcé par fil (417).

5. Prise d'air individuelle selon une quelconque revendication précédente, dans laquelle le corps est réglable en orientation de sorte que la sortie est configurée pour délivrer de l'air dans de multiples directions par rapport à l'entrée.

6. Prise d'air individuelle selon une quelconque revendication précédente, dans laquelle la sortie comporte une buse réglable (316) configurée pour régler une vitesse de l'air qui est délivré par la sortie.

7. Prise d'air individuelle selon une quelconque revendication précédente, comprenant en outre un élément chauffant couplé à l'entrée et configuré pour chauffer l'air reçu par l'entrée.

8. Prise d'air individuelle selon une quelconque revendication précédente, dans laquelle la sortie est conçue pour délivrer de l'air à une vitesse d'au moins 16,4 pieds par seconde (5 m par seconde).

9. Prise d'air individuelle selon une quelconque revendication précédente, comprenant en outre une prise électrique (420) située sur la sortie et configurée pour fournir de l'énergie électrique afin d'alimenter un dispositif électrique.

10. Prise d'air individuelle selon une quelconque revendication précédente, dans laquelle la sortie est formée à partir d'un matériau plus souple (422) que le corps pour réduire le risque de blessure provoquée par le contact entre une partie du corps et la sortie.

11. Prise d'air individuelle selon une quelconque revendication précédente, comprenant en outre un élément d'alignement (512) situé sur la prise d'air individuelle et configuré pour faciliter un alignement optimal de la sortie par rapport à un passager.

12. Prise d'air individuelle selon une quelconque revendication précédente, comprenant en outre au moins l'un parmi un filtre, un rafraîchisseur d'air ou un assainisseur d'air (514) configuré pour au moins l'un parmi la filtration, le rafraîchissement ou l'assainissement de l'air délivré par la sortie.

13. Prise d'air individuelle selon une quelconque revendication précédente, la sortie ayant une forme annulaire configurée pour délivrer de l'air vers le siège passager à une vitesse comprise entre 49 pieds par seconde (ft/s) et 65,6 pieds/s (15 mètres par seconde (m/s) et 20 m/s).
